# EUROPEAN PATENT APPLICATION

(11) **EP 4 793 898 A1**
(43) Date of publication of application: **19.08.2026**
(21) Application number: 25167060.0
(22) Date of filing: 28.03.2025
(51) Int. Cl.: G06V 10/764, G06V 10/774, G06V 40/16

(54) **TRAINING SYSTEM AND METHOD FOR DEEPFAKE DETECTION MODEL**

(30) Priority: 14.02.2025 KR 20250019459
(71) Applicant: Korea Electronics Technology Institute, Bundang-gu, Seongnam-si Gyeonggi-do 13509 (KR)
(72) Inventor: KIM, Gui Sik, 13557 Seongnam-si, Gyeonggi-do (KR); CHO, Choong Sang, 13645 Seongnam-si, Gyeonggi-do (KR); LEE, Young Han, 13481 Seongnam-si, Gyeonggi-do (KR); KIM, Tae Woo, 13590 Seongnam-si, Gyeonggi-do (KR)
(74) Representative: Isarpatent

(57) **Abstract**

Provided is a deepfake detection model training system and method. A deepfake detection model training method according to an embodiment includes: combining a training dataset by using real face images, fake face images, and enhanced face images; and training a deepfake detection model by using the combined training dataset, and the deepfake detection model is a deep learning network model that classifies input images as a real class, a fake class, and an enhancement class. Accordingly, the deepfake detection model may classify even enhancement face images which are widely used recently, so that an error of falsely detecting an enhancement face image as a fake face image may be prevented.

## Description

### BACKGROUND

### FIELD

The disclosure relates to deepfake detection, and more particularly, to a deepfake detection model which has a fine discrimination function, and a training data augmentation and training system and method for the same.

### DESCRIPTION OF RELATED ART

Deepfake detection technologies are typically based on deep learning model development and training data augmentation to classify two classes, real and fake classes. However, this approach may make a deepfake detection model vulnerable to face enhancement. Specifically, the deepfake detection model may falsely detect an enhanced face image that should be classified as a real face image as a fake image.

A typical training method for deepfake detection models uses a training dataset as it is, but this method may overly focus on high-difficulty or abnormal data due to training data having differing quality, causing the model to overfit or fail to converge at the early training stage.

### SUMMARY

The disclosure has been developed in order to solve the above-described problems, and an object of the disclosure is to provide a deepfake detection model which is capable of classifying not only real face images and fake face images but also enhancement face images, and a system and a method for training the same.

Another object of the disclosure is to provide a system and a method for augmenting training data for the deepfake detection model and training the deepfake detection mode more effectively by using the augmented training data.

To achieve the above-described objects, a deepfake detection model training method according to an embodiment may include: combining a training dataset by using real face images, fake face images, and enhanced face images; and training a deepfake detection model by using the combined training dataset, and the deepfake detection model may be a deep learning network model that classifies input images as a real class, a fake class, and an enhancement class.

According to an embodiment, the deepfake detection model training method may further include generating enhanced face images by correcting the real face images and the fake face images.

Generating may include generating the enhanced face images by using the following equation: ${I}_{E} = {aI}_{enhance} + \left(1-a\right) I$ where I_{E} is an enhanced face image, I is an original face image which is one of the real face image and the fake face image, I_{enhance} is a corrected face image that is generated by correcting I, and *a* is a coupling parameter of I_{enhance} and I, wherein 0≤*a*≤1.

Combining may include controlling to make a configuration of the fake face images in the training data vary as training progresses. Combining may include increasing a ratio of high-quality fake face images whose fake quality is greater than or equal to a reference in the training dataset as the training progresses. Combining may include adjusting a growth rate of the ratio of high-quality fake face images.

Combining may include increasing the ratio of high-quality fake face images according to the following equation: ${r}_{t} = {r}_{min} + \left({r}_{max}-{r}_{min}\right) \times {\left(\frac{t}{T}\right)}^{p}$ where *rₜ* is a ratio of high-quality fake face images at epoch *t, rₘᵢₙ* is a ratio of initial high-quality fake face images, *rₘₐₓ* is a ratio of final high-quality fake face images, and *p* is a parameter for adjusting the growth rate of the ratio of high-quality fake face images from the first epoch 1 to the final epoch T.

The high-quality fake face image may be an image that undergoes fine-tunning and editing after face swapping or face blending.

According to an embodiment, the deepfake detection model training method may further include: determining a correction technique of an enhanced face image that is correctly classified as the enhancement class; reconstructing an original face image of the enhanced face image in an inverse-correction technique corresponding to the predicted correction technique; and additionally training the deepfake detection model not to classify the reconstructed original face image as the enhancement class.

According to another embodiment of the disclosure, a deepfake detection model training system may include: a combination unit configured to combine a training dataset by using real face images, fake face images, and enhanced face images; and a training unit configured to train a deepfake detection model by using the combined training dataset, and the deepfake detection model may be a deep learning network model that classifies input images as a real class, a fake class, and an enhancement class.

According to still another embodiment of the disclosure, a deepfake detection method may include: acquiring images; inputting the acquired images to a deepfake detection model and classifying the images as a real class, a fake class or an enhancement class; and displaying a result of classifying, and the deepfake detection model may be a deep learning network model that classifies input images as a real class, a fake class, and an enhancement class, and may be trained by a training dataset which is generated by combining real face images, fake face images, and enhanced face images.

As described above, according to embodiments of the disclosure, the deepfake detection model may classify not only real face images and fake face images, but also enhancement face images which are widely used recently, so that an error of falsely detecting an enhancement face image as a fake face image may be prevented and the accuracy of deepfake detection may be improved.

In addition, according to embodiments of the disclosure, enhancement face images that should be distinguished by the deepfake detection model may be augmented from real face images and fake face images, so that it is possible to secure the enhancement face images and to perform effective training by using the enhancement images while improving the fake quality.

Other aspects, advantages, and salient features of the invention will become apparent to those skilled in the art from the following detailed description, which, taken in conjunction with the annexed drawings, discloses exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a view illustrating a deepfake detection model training system according to an embodiment of the disclosure;
FIG. 2 is a view illustrating an enhanced face image generation method;
FIG. 3 is a view illustrating a training dataset generation method by a training image combination;
FIG. 4 is a view illustrating a deepfake detection model training method according to another embodiment of the disclosure;
FIG. 5 is a view illustrating a deepfake detection model training system according to still another embodiment of the disclosure;
FIG. 6 is a view illustrating a deepfake detection model training method according to yet another embodiment of the disclosure; and
FIG. 7 is a view illustrating a deepfake detection system according to a further embodiment of the disclosure.

### DETAILED DESCRIPTION

Hereinafter, the disclosure will be described in more detail with reference to the accompanying drawings.

Embodiments of the disclosure provide a system and a method for training a deepfake detection model. The disclosure relates to a technology for classifying not only real face images and fake face images, but also enhanced face images (corrected face images) which are widely used recently with a deepfake detection model.

Furthermore, the system and method in an embodiment of the disclosure may learn by augmenting enhanced face images that a deepfake detection model of a new type should determine from real face images and fake face images, and may perform effective training with respect to fake face images while improving fake quality of training data as training progresses.

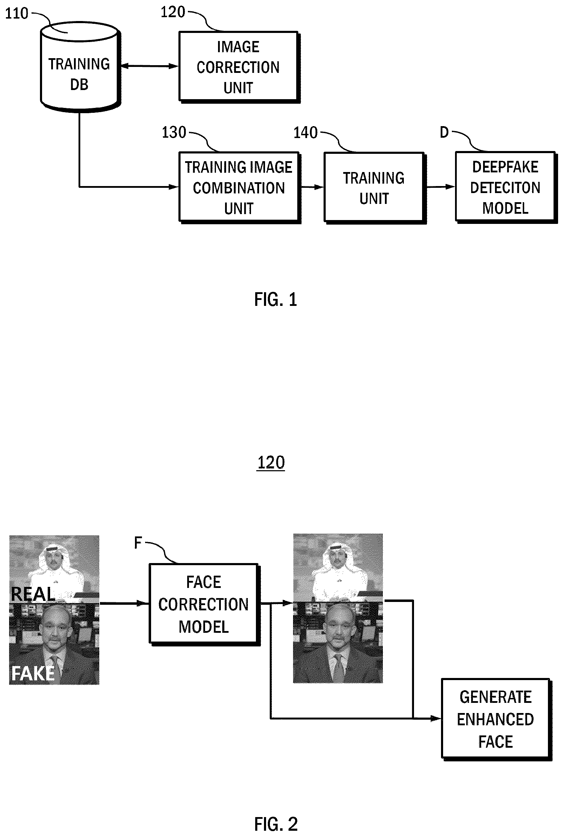

FIG. 1 is a view illustrating a configuration of a deepfake detection model training system according to an embodiment of the disclosure. As shown in the drawing, the deepfake detection model training system according to an embodiment may include a training database (DB) 110, an image correction unit 120, a training image combination unit 130, and a training unit 140.

The training DB 110 may store training images that are used for training a deepfake detection model D. The training images stored may include real face images, fake face images, and enhanced face images. The real face images may be labeled with real classes, the fake face images may be labeled with fake classes, and the enhanced face images may be labeled with enhancement classes.

The image correction unit 120 may generate enhanced face images by correcting the real face images and the fake face images which are stored in the training DB 110. Accordingly, the enhanced face images may be distinguished as images that are generated from the real face images, and images that are generated from the fake face images.

The training image combination unit 130 may generate a training dataset by combining the real face images, the fake face images, and the enhanced face images which are stored in the training DB 110, and may adjust the fake quality of fake face images according to a training stage.

The training unit 140 may train the deepfake detection model D by using the training dataset which is generated by the training image combination unit 130. The deepfake detection model D may be a deep learning network model that classifies input images into the real class, fake class, and enhancement class.

The training unit 140 may input images constituting the training dataset to the deepfake detection model D to classify classes, and may update parameters of the deepfake detection model D by calculating a difference between the classified class and a correct class which is labeled in the training data with a loss function.

The deepfake detection model D proposed in an embodiment of the disclosure may classify not only the real class and the fake class but also the enhancement class, so that an error of falsely detecting an enhancement class as a fake class does not occur.

Hereinafter, generating enhanced face images by the image correction unit 120 will be described in detail with reference to FIG. 2.

The image correction unit 120 may generate an enhanced face image from a real face image stored in the training DB 110 as shown in the upper view of FIG. 2, while generating an enhanced face image even from a fake face image stored in the training DB 110 as shown in the lower view of FIG. 2.

Enhanced face images may be generated according to Equation 1 presented below:
${I}_{E} = {aI}_{enhance} + \left(1-a\right) I$
where I_{E} is an enhanced face image, I is an original face image (either one of the real face image or the fake face image as described above), I_{enhance} is a corrected face image that is generated by inputting I into a face correction model F, and *a* is a coupling parameter of I_{enhance} and I, wherein 0≤*a*≤1.

The face correction model F may use a generative AI model or other AI models, and may be substituted with a non-AI-based correction algorithm.

*a* is a parameter for adjusting a degree of reflection of the original face image and the corrected face image in generating the enhanced face image, and as *a* is greater, the corrected face image is more reflected on the enhanced face image, and as *a* is smaller, the original face image is more reflected on the enhanced face image.

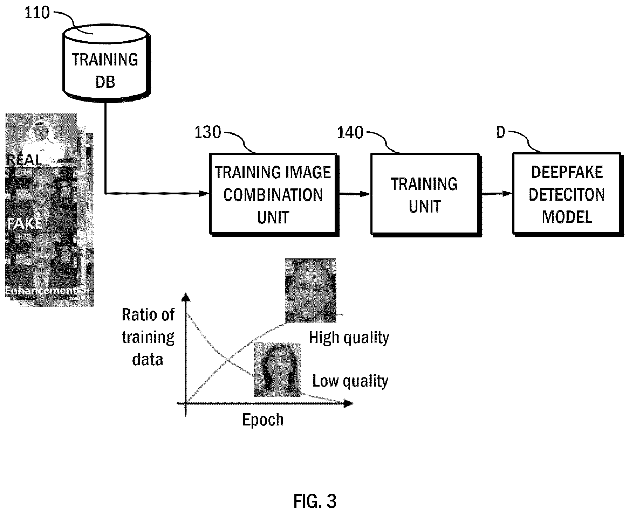

Hereinafter, generating a training dataset by the training image combination unit 130 will be described in detail with reference to FIG. 3.

The training image combination unit 130 may generate a training dataset by combining the real face images, the fake face images, and the enhanced face images which are stored in the training DB 110, and may improve the fake quality in the process of proceeding with training with respect to the fake face images which are subject to the combination.

That is, the training image combination unit 130 may control such that the ratio of high-quality fake face images (whose fake quality is greater than or equal to a reference) in the training dataset increases as the epoch increases, which is expressed by Equation 2 presented below:
${r}_{t} = {r}_{min} + \left({r}_{max}-{r}_{min}\right) \times {\left(\frac{t}{T}\right)}^{p}$
where *rₜ* is a ratio of high-quality fake face images at epoch *t, rₘᵢₙ* is a ratio of initial high-quality fake face images, and *rₘₐₓ* is a ratio of final high-quality fake face images. *p* is a parameter for adjusting a growth rate of the ratio of high-quality fake face images from the first epoch 1 to the final epoch T, and if p=1, the growth rate is linear, if p<1, the growth rate may sharply increase in the first half, and if p>1, the growth rate may sharply increase in the second half.

The high-quality fake face image refers to an image that results from fine tuning and editing after face swapping or face blending. In contrast, a low-quality fake face image refers to an image for which only face swapping or face blending is performed and fine-tuning and editing are not performed.

In this way, the training image combination unit 130 may gradually increase the ratio of high-quality fake face image to fake face images as the training progresses, so that the deepfake detection model D is trained with low-quality fake face images in the first half of the training and is trained with high-quality fake face images in the second half of the training, and to this end, the learning effect of the deepfake detection model D may be improved by training with high-difficulty training data as the amount of training increases.

The training unit 140 may apply a loss function to dynamically vary by training stages in training the deepfake detection model D. Specifically, it is possible to utilize the root mean squared error (RMSE) as the loss function in the first half of the training stage (for example, if t<T/2 in the above equation), which corresponds to easy training, and to utilize the root mean squared error (RMSE) as the loss function in the second half of the training stage corresponding to hard training (for example, if t≥T/2 in the above equation).

Since the RMSE is the square root of the MSE, the error may be calculated similarity to an actual error. On the other hand, since the MSE is not rooted, the error may be more exaggerated than an actual error. In addition, if the error is calculated large, the deepfake detection model D may be updated a lot during the training process, while if the error is calculated small, the deepfake detection model D is updated a little during the training process.

Based on this, in an embodiment of the disclosure, the error is calculated relatively small with the RMSE in the first half of the training stage at which training is easy, so that the deepfake detection model D is updated a little, and the error is calculated relatively large with the MSE in the second half of the training stage at which training is difficult, so that the deepfake detection model D is updated a lot.

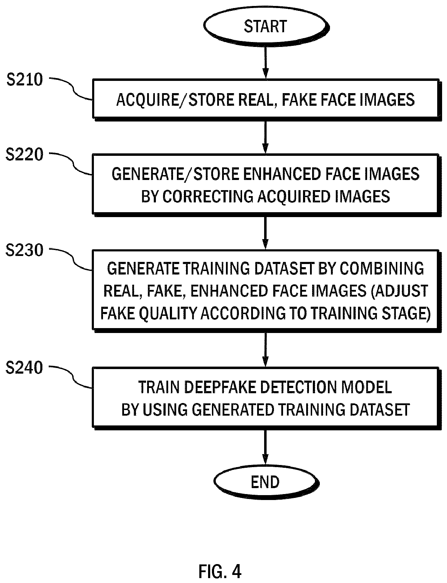

FIG. 4 is a flowchart illustrating a deepfake detection model training method according to another embodiment of the disclosure.

As shown in the drawing, real face images and fake face images may be acquired as training images to be used for training the deepfake detection model D, and may be stored in the training DB 110 (S210).

The image correction unit 120 may generate enhanced face images by correcting the real face images and the fake face images which are acquired at step S210, and may store the generated enhanced face images in the training DB 110 (S220).

The training image combination unit 130 may generate a training dataset by combining the real face images, the fake face images, and the enhanced face images which are stored in the training DB 110, and may adjust the fake quality of the fake face image according to a training stage (S230).

The training unit 140 may train the deepfake detection model D by using the training dataset generated at step S230.

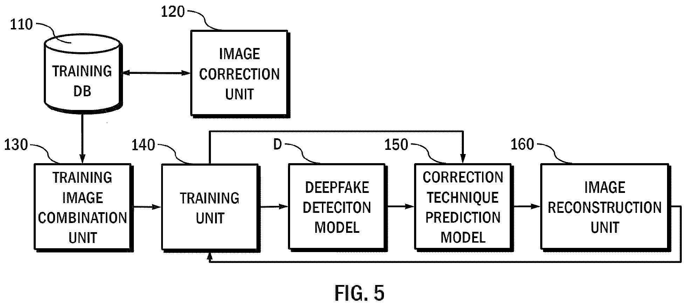

FIG. 5 is a view illustrating a configuration of a deepfake detection model training system according to still another embodiment of the disclosure. The deepfake detection model training system according to an embodiment may be implemented by adding a correction technique prediction model 150 and an image reconstruction unit 160 to the system proposed in FIG. 1.

The correction technique prediction model 150 may receive enhanced face images that are correctly classified as the enhancement class by the deepfake detection model D from the training unit 140 to predict a correction technique applied to the corresponding image.

A target to be processed by the correction technique prediction model 150 may be enhanced face images that are correctly classified as the enhancement class by the deepfake detection model D. That is, images that are classified as the real class by the deepfake detection model D, images that are classified as the fake class, and images that are "falsely" classified as the enhancement class are not subject to processing by the correction technique prediction model 150.

The correction technique prediction model 150 may be a deep learning network model that is trained to predict a correction technique applied to an input image. To train the correction technique prediction model 150, the image correction unit 120 may label enhanced face images with the correction technique that is applied in generating the enhanced face images by correcting the real face images and the fake face images stored in the training DB 110. Then, it is possible to train the correction technique prediction model 150 by using the enhanced face images stored in the training DB 110.

The image reconstruction unit 160 may reconstruct the original face image of the enhanced face image by applying an inverse-correction technique corresponding to the correction technique predicted by the correction technique prediction model 150.

The training unit 140 may train the deepfake detection model D not to classify the original face image reconstructed by the image reconstruction unit 160 as the enhancement class. That is, the training unit 140 may train the deepfake detection model D, such that, when the original face image of the enhanced face image is the real face image, the deepfake detection model D classifies the original face image reconstructed by the image reconstruction unit 160 as the real face image, and, when the original face image of the enhanced face image is the fake face image, the deepfake detection model D classifies the original face image reconstructed by the image reconstruction unit 160 as the fake face image.

According to embodiments of the disclosure, the accuracy of classifying the enhanced face images by the deepfake detection model D may further be enhanced.

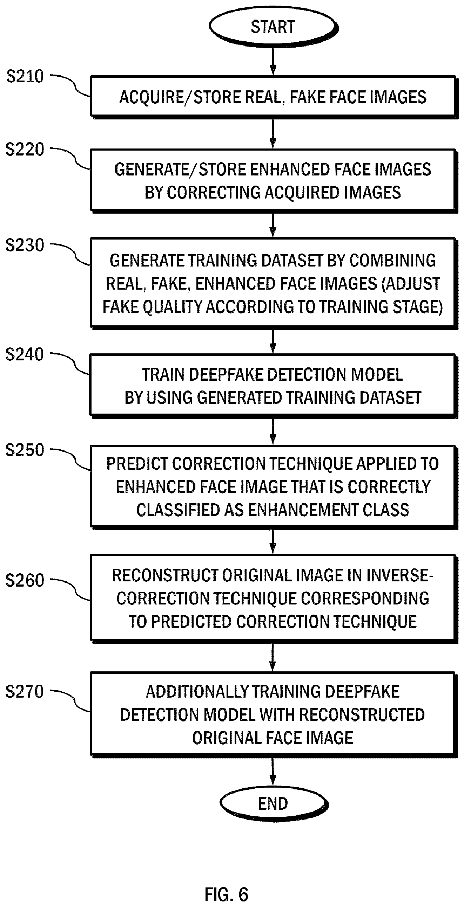

FIG. 6 is a flowchart illustrating a deepfake detection model training method according to yet another embodiment of the disclosure. The deepfake detection model training method according to an embodiment include steps S250 to S270 added to steps S210 to S240 of FIG. 4.

In the training process at step S240, the correction technique prediction model 150 may predict the correction technique that is applied to the enhanced face image that is correctly classified as the enhancement class by the deepfake detection model D (S250).

The image reconstruction unit 160 may reconstructs the original face image of the enhanced face image by applying an inverse-correction technique corresponding to the correction technique predicted at step S250 (S260).

Then, the training unit 140 may additionally train the deepfake detection model D not to classify the original face image reconstructed at step S260 as the enhancement class (S270).

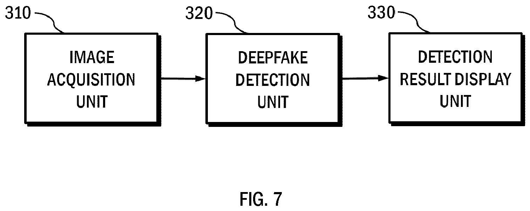

FIG. 7 is a view illustrating a configuration of a deepfake detection system according to a further embodiment of the disclosure. As shown in the drawing, the deepfake detection system according to an embodiment may include an image acquisition unit 310, a deepfake detection unit 320, and a detection result display unit 330.

The image acquisition unit 310 may acquire an image corresponding to a deepfake detection target, and may input the image into the deepfake detection unit 320. The deepfake detection unit 320 may classify the image inputted by the image acquisition unit 310 as a real class, a fake class, and an enhancement class with the deepfake detection model D that is trained by the system proposed in FIG. 3 or 5. The detection result display unit 330 may display a result of detecting by the deepfake detection unit 320.

Up to now, the deepfake detection model training system and method has been described in detail with reference to preferred embodiments.

In the above-described embodiments, the deepfake detection model may classify not only real face images and fake face images, but also enhancement face images which are widely used recently, so that an error of falsely detecting an enhancement face image as a fake face image may be prevented and the accuracy of deepfake detection may be improved.

In addition, enhancement face images that should be distinguished by the deepfake detection model may be augmented from real face images and fake face images, so that it is possible to secure the enhancement face images and to perform effective training by using the enhancement images while improving the fake quality.

The technical concept of the disclosure may be applied to a computer-readable recording medium which records a computer program for performing the functions of the apparatus and the method according to the present embodiments. In addition, the technical idea according to various embodiments of the disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

## Claims

1. A deepfake detection model training method comprising:
combining a training dataset by using real face images, fake face images, and enhanced face images; and
training a deepfake detection model by using the combined training dataset,
wherein the deepfake detection model is a deep learning network model that classifies input images as a real class, a fake class, and an enhancement class.

2. The deepfake detection model training method of claim 1, further comprising generating enhanced face images by correcting the real face images and the fake face images.

3. The deepfake detection model training method of claim 1, wherein generating comprises generating the enhanced face images by using the following equation: ${I}_{E} = {aI}_{enhance} + \left(1-a\right) I$ where I_{E} is an enhanced face image, I is an original face image which is one of the real face image and the fake face image, I_{enhance} is a corrected face image that is generated by correcting I, and *a* is a coupling parameter of I_{enhance} and I, wherein 0≤*a*≤1.

4. The deepfake detection model training method of claim 1, wherein combining comprises controlling to make a configuration of the fake face images in the training data vary as training progresses.

5. The deepfake detection model training method of claim 4, wherein combining comprises increasing a ratio of high-quality fake face images whose fake quality is greater than or equal to a reference in the training dataset as the training progresses.

6. The deepfake detection model training method of claim 5, wherein combining comprises adjusting a growth rate of the ratio of high-quality fake face images.

7. The deepfake detection model training method of claim 6, wherein combining comprises increasing the ratio of high-quality fake face images according to the following equation: ${r}_{t} = {r}_{min} + \left({r}_{max}-{r}_{min}\right) \times {\left(\frac{t}{T}\right)}^{p}$ where *rₜ* is a ratio of high-quality fake face images at epoch *t, rₘᵢₙ* is a ratio of initial high-quality fake face images, *rₘₐₓ* is a ratio of final high-quality fake face images, and *p* is a parameter for adjusting the growth rate of the ratio of high-quality fake face images from the first epoch 1 to the final epoch T.

8. The deepfake detection model training method of claim 5, wherein the high-quality fake face image is an image that undergoes fine-tunning and editing after face swapping or face blending.

9. The deepfake detection model training method of claim 2, further comprising:
determining a correction technique of an enhanced face image that is correctly classified as the enhancement class;
reconstructing an original face image of the enhanced face image in an inverse-correction technique corresponding to the predicted correction technique; and
additionally training the deepfake detection model not to classify the reconstructed original face image as the enhancement class.

10. A deepfake detection model training system comprising:
a combination unit configured to combine a training dataset by using real face images, fake face images, and enhanced face images; and
a training unit configured to train a deepfake detection model by using the combined training dataset,
wherein the deepfake detection model is a deep learning network model that classifies input images as a real class, a fake class, and an enhancement class.

11. A deepfake detection method comprising:
acquiring images;
inputting the acquired images to a deepfake detection model and classifying the images as a real class, a fake class or an enhancement class; and
displaying a result of classifying,
wherein the deepfake detection model is a deep learning network model that classifies input images as a real class, a fake class, and an enhancement class, and is trained by a training dataset which is generated by combining real face images, fake face images, and enhanced face images.
